# EUROPEAN PATENT SPECIFICATION

(11) **EP 1 195 999 B1**
(45) Date of publication and mention of the grant of the patent: **25.05.2005**
(21) Application number: 01121550.6
(22) Date of filing: 10.09.2001
(51) Int. Cl.: H04Q 7/34

(54) **Network management system and method of management control in a communication system**
Netzwerksteuerungssystem und Verwaltungssteuerungsverfahren in einem Kommunikationssystem
Système de gestion de réseau et procédé de commande de gestion dans un système de communication

(30) Priority: 06.10.2000 GB 0024631
(43) Date of publication of application: 10.04.2002
(73) Proprietor: MOTOROLA, INC., Schaumburg, IL 60196 (US)
(72) Inventor: Thomas, Howard, Cirencester, Gloucesterhire GL7 1EJ (GB); Crichton, Paul, Newbury, Berks RG15 9XY (GB); Chambers, David Fraser, Bath, BA1 7BQ (GB); Bartlett, Ian, Marlborough, Wiltshire SN8 1UJ (GB)
(74) Representative: Jepsen, Rene Pihl

(56) References cited:
- EP-A- 0 549 937
- DE-A- 19 801 785
- US-A- 5 646 864

## Description

### Background to the Invention

This invention relates, in general, to a telecommunication network management system and is particularly, but not exclusively, applicable to cellular-type systems supporting a distributed control arrangement, such as that provided by interconnected base site controllers (BSCs) and operations and management centres (OMCs).

### Summary of the Prior Art

Generally, in distributed telecommunication networks, particularly telecommunication networks used for providing wireless telecommunications (such as the Global System for Mobile communication, GSM), the identification of faults within the network becomes increasingly difficult. In such networks, an end-to-end route for a call is not known at call set-up and the call, in any event, may traverse networks owned or managed by several independent operators. Moreover, with the rapidly growing deployment of infrastructure, and with modern systems operating greater flexibility and dynamism, it is becoming increasingly difficult to manage fault tracking. In particular, it is difficult to verify the accuracy and authenticity of fault information and to determine from fault information where the problem actually lies. Anyway, remote identification of faults seldom provides an indication of the underlying cause of such faults and so identification and implementation of appropriate remedial actions is, to say the least, presently difficult.

There is thus a need for improved fault tracking and identification in network environments, with this particularly so in distributed telecommunication networks.

Operations and management centres (OMCs) may be provided to administer certain elements of the network or, alternatively, a single centre may manage the entire network. Generally speaking, such management centres receive information only in relation to high level statistics and alarms, but not on specific problems. Usually, therefore, additional data is required in order to make a more detailed analysis of the system, to diagnose faults or to optimise sections of network performance. In a rapidly expanding distributed system, possibly spread across a large geographical region, collecting additional data may require access, either physically or logically, to different network elements or nodes in order to download the extra data required and this is time-consuming and potentially difficult.

In, for example, a distributed wireless telecommunications network, system performance/operation can be impacted by numerous changes in topology and functionality. Usually, the extent of such change cannot be accurately modelled (e.g. in advance of roll-out of additional equipment), with detailed analysis required to at least identify possible solutions. Indeed, elements that are key to performance of a cellular system often require analysis of extensive historically compiled data, which elements impact or relate to: performance optimisation; hot spot detection; handover problems and areas of interference; frequency planning; firmware, software or hardware problems associated with any network element or node; and radio coverage testing.

Indeed, during operation of a cellular system (in particular), many problems associated with the cellular system are difficult to identify and rectify due to lack of specific diagnostic information. These problems may arise from specific aspects of the particular system configuration, usage or congestion patterns, software load or other factors. Moreover, data available to the OMC to monitor specific network parameters may be insufficient or impossible to relate to user-specific problems or conditions.

Other telecommunication networks typically require infrastructure-specific information when assessment of network operation is required.

German Patent Application DE 198 01 785 A1 discloses a layered management network wherein alarm data is transmitted from an agent of a management level to at least one manager of the next higher management level. A message is sent from the manager to the agent to request adjustment of repeatedly transmitted alarm data from the agent. Correlation data is sent to the manager for allocation of each respective request to the messages successively sent by the agent.

European Patent Convention Patent Application EP 0 549 937 A1 discloses a system for fault correlation and localization in a communication network. A specific alarm structure is disclosed facilitating fault correlation and localization.

United States Patent US 5,646,864 discloses a system for event correlation in telecommunication networks. Alarms are correlated to establish alarms which have a common cause.

Prior art systems have employed intelligent optimisation or expert adviser systems to provide the necessary performance analyses. Such systems are centralised and require considerable amounts of additional data to be gathered centrally before the analysis can be conducted. In the alternative, sufficient data can be accumulated at the network nodes during operation and forwarded to the OMC in case such analysis is required. However, increasing bandwidth constraints and the increasing quantities of data generated by a rapidly expanding network means that such approaches are unsuitable in large distributed telecommunications systems. In other words, management overhead is becoming of increasing concern in view of limited spectral resources and the desire to maximise revenue by supporting as many users as possible within the allocated spectrum.

Generally, individual nodes have acted to compress node-specific management data that is then individually communicated to a central management agent, e.g. an OMC, for decompression, processing and assessment.

### Summary of the Invention

According to a first aspect of the invention there is provided a telecommunication network in accordance with claim 1.

The composite performance parameter is preferably further compressed. The low-level operational performance data may also be at least one of event-driven, time-driven or channel associated data, and the data is time referenced.

Preferably, the executable program code has a function dependent upon the function of the node into which the executable program code is downloaded.

In a preferred embodiment, the network management device generates the executable program code to be downloaded.

Generally, the correlating node is configured either to select data that is to be correlated or the correlating node is responsive to an instruction that targets data to be correlated.

The telecommunication preferably includes means for correlating data generated by the executable program code in parallel paths, thereby to identify faults.

In one particular embodiment, correlated data of parallel paths is communicated to a central management point arranged to interpret the correlation data to identify at least one of a network fault and performance of the telecommunication network.

In a further aspect of the present invention there is provided a node in accordance with claim 8.

In yet another aspect of the present invention there is provided a method of managing a telecommunication system in accordance with claim 9.

In a particular embodiment, the method further includes attempting to cause execution of program code at the second node;

In another complementary or alternative embodiment, the method correlates data generated by the executable program code in parallel paths; and then identifies a fault of at least one of the node and a connection path thereto from data correlation.

Each node of the telecommunications network thus includes an application space into which specific programs, such as program elements, applets or primitives, may be downloaded. These application spaces will support programs of specific functionality, dependent upon the functionality of the node, for example a base station will need to run different applications from a mobile switching centre or a home location register, and will allow real-time downloading and running of code. Selected data, either event-driven or time-driven or channel associated, is communicated between DPASs (such as in BSCs and BTSs) running test program applets.

These specific programs may be generated by the node or by the OMC and distributed to specific network nodes. Alternatively or additionally, certain specific programs may be included into the functionality of the node during construction or installation.

The specific programs can thus determine the information required by the OMC so that only relevant information needs to be sent over the network. Since much of the analysis may be conducted at the node, or nodes, in question, the information sent to the OMC may be limited to the results of the analysis.

The source of errors and faults in a distributed network can thus be determined without resorting to centralised OMC functions, since any node within the network can initiate a test sequence, either locally or across the entire network.

The nodes may contain a local clock, referenced to a central time reference. Parameters recorded or measured by the program element may be time stamped by the local clock. Consequently, when this information is exchanged between one node and another, or between a node and a centralised OMC, the information may be correlated and identified by the time stamped. It may thus be possible to recognise events as a result of this correlation and identification process, in order to determine network performance. The determined network performance may be further used to determine the need for a change in the network.

One advantage of the invention is that the reliability of the network is monitored by other elements of the network and is not reliant on locally defined and held self-test routines or centralised test procedures. Another advantage is that testing of the network is not limited to the testing of physical links, service or content provision, Quality of Service (QoS), and that other diverse parameters can be tested. Such an approach may be especially useful in network systems where several operators and service or content providers provide separate elements or collaborate to provide and manage the network.

Another advantage of the invention is that control of the various downloaded specific programs is delegated to the node or network element initiating the application. Delegated control is passed from node to node as the test applications, in particular, are spread through the network. Where the program element is downloaded to a specific network node for, in particular data collection and analysis, the node may interact with other nodes to obtain and verify the information but delegated control is maintained at the delegated node.

Yet another advantage of the invention is that by providing end user devices (and in particular mobile devices) with an application space enables new and problem specific software to be downloaded into the device, thereby enabling specific conditions to be tracked and monitored. The diagnostic applications can preprocess data or initiate fault locating procedures on behalf of the OMC.

Yet another advantage of the invention is that diagnostic applications may operate in a pre-emptive mode and actually force a particular failure or condition in the network to assist in identifying the cause of the problems.

One aspect of the present invention is particularly applicable to fixed networks having variable quality of service (QoS), and in which fixed networks there is a partial loss of communication capabilities resulting in a reduction in functionality.

### Brief Description of the Drawings

Exemplary embodiments of the present invention will now be described with reference to the following drawings, in which:
FIG. 1 shows in outline a telecommunications network providing wireless communications to a variety of different users, the telecommunications network adaptable to support the concepts of the present invention; and
FIGs. 2 and 3 are flow diagrams of preferred operating methodologies by which management data is accumulated, routed and analysed by management control elements of FIG. 1.

### Detailed Description of a Preferred Embodiment

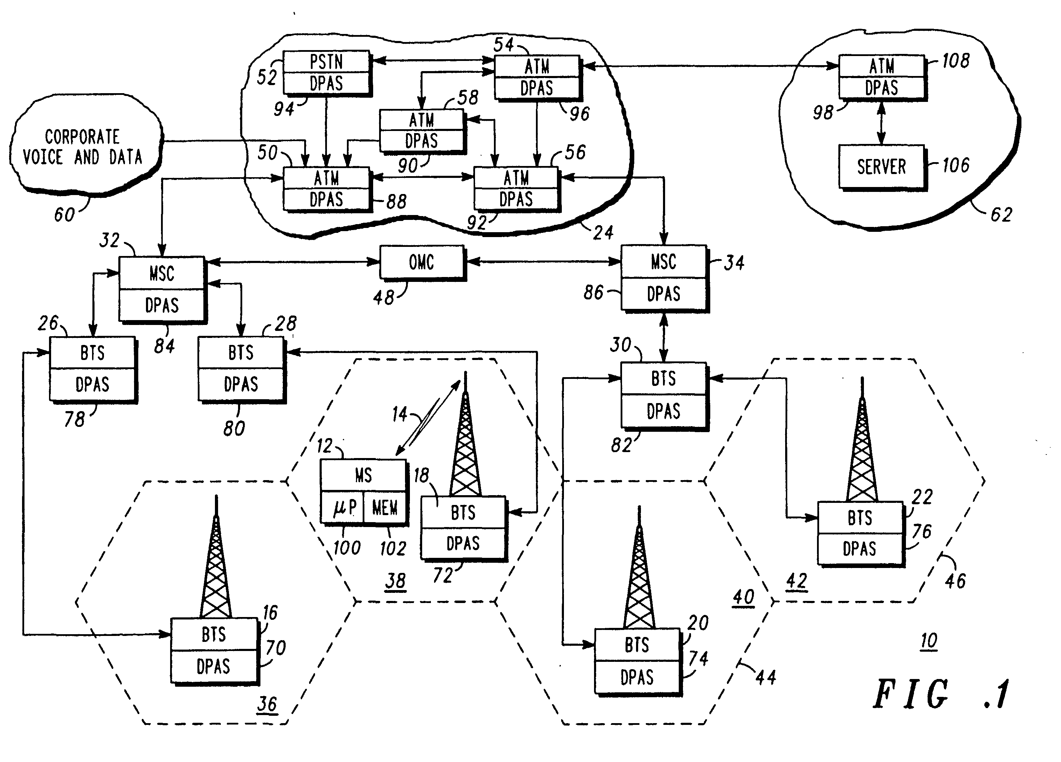

FIG. 1 shows, in outline, a telecommunication system 10. A mobile station (MS) 12 (of which there are many within each cell of the system) communicates over an air interface 14 with at least one base transceiver station (BTS) 16-22 support a coverage area. Each BTS 16-22 is connected to a telephone network 24 via a base station controller (BSC) 26-30 and a mobile switching centre (MSC) 32-34. BTS are therefore interconnected through MSCs. Each BSC 26-30 is therefore responsible for providing service to at least one cell 36-42 through control of one or more BTSs 16-22, with each cell containing one or more BTSs. The system may support and overlay-underlay environment of cells, as is well known, with a plurality of micro-cells 44-46 controlled by a single BSC. Each MSC may also be connected to an operations and maintenance centre (OMC) 48. The OMC may contain a central time reference, with which clocks in the various other nodes of the network may be synchronised.

In combination, a BSC and BTS is generally referred to as a base station subsystem (BSS).

Along with the OMC 48, the mobile stations 14 and BSSs (and other network devices) are all nodes of the telecommunication system 10.

Connected in the telephone network 24 are a plurality of interconnected multi-architecture telecommunications networks 50-58, including networks supporting broadband and narrowband domains (e.g. broadband asynchronous transmission mode (ATM) networks, narrowband public-switched telephone networks (PSTNs) and integrated service digital networks (ISDNs, etc). Also connected to the telephone network are corporate voice and data networks 60 (e.g. intranets) and internets 62.

Each node of the network contains a downloadable programmable application space (DPAS) 70-98 which supports one or more primitives that can be programmably configured to perform a number of different tasks upon receipt of a specific downloaded program (sent, for example, in the form of an applet or the like). The mobile stations within the network may also contain a DPAS to receive, store and initiate specific program applications; the DPAS shown in the form of a microprocessor 100 and associated memory 102.

One embodiment of the invention has a file server 106 connected to the telephone network 24, the file server accessible by a MS through a service provider. A router 108, providing routing and interface capabilities to the telephone network 24, is disposed between the telephone network 24 and the file server 106. Of course, rather than being subject to a permanent connection, the file server 106 may be connected periodically to the telephone network 24 via a modem (not shown).

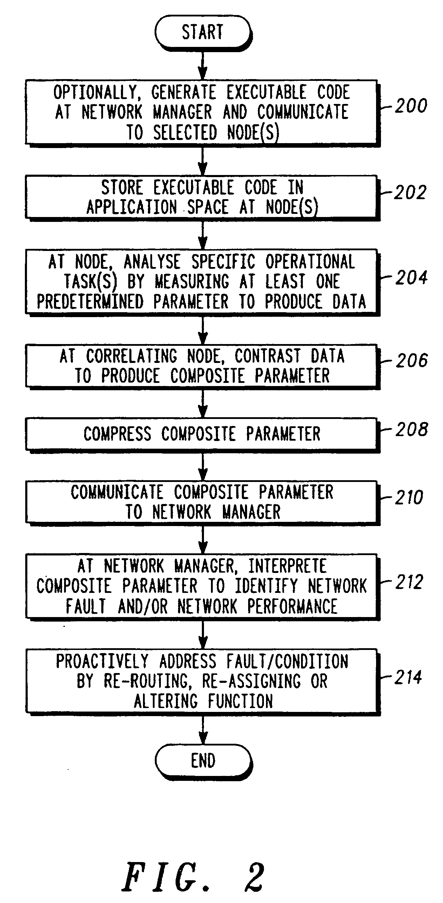

By way of operational overview (as shown in FIG. 2), the present invention looks to acquire relatively low-level system data from a number of locations, i.e. nodes. The low-level system data, such as quality of service metrics from subscribers, is then communicated to at least one of the nodes tasked to obtain the low-level system data at which point correlation of this low-level system data from the various other (similarly tasked) nodes is undertaken at a correlation node. Should the correlation reveal a particular anomaly (in terms of operational parameters or in time), then a compressed summary (i.e. selective information in a predetermined report format) of this anomaly is communicated to a central management point, such as an OMC or the like. In contrast with prior art systems that send large volumes of semi-compressed data to a central management point, the present invention instead limits fault reporting (and hence bandwidth utilisation) to highly compressed pertinent data that is directly relevant to the performance or optimisation of the system (or portion thereof) under test.

Generally, either in response to an alarm trigger or independently on a management (housekeeping) basis (step 200 of FIG. 2)), management programs or applets are communicated to identified system nodes, such as BTSs, BSCs or MSs, where such programs and applets are loaded 202 to the respective DPAS 70-96. Local control processor functionality implements 204 the program or applet which tasks the local ("test") node to acquire information pertaining to certain identified operational parameters or connection paths/routes. Such operational parameters may be measures of quality of service (e.g. E_{b}/Nₒ and/or frame erasure rate (ER) in the case of a CDMA system, or bit error rate (BER) or signal strength (RSSI) in the context of GSM-type systems) or serving cell identities, etc. The identified operational parameters or connection paths/routes are then monitored, typically over a predetermined period. The program or applet also generally includes a reference to other nodes similarly instructed to undertake the acquisition of information/data pertaining to certain identified operational parameters or connection paths/routes. Once information/data is being/has been accumulated at the node, then the program or applet causes communication of the information/data to a designated node for correlation/contrast (206 of FIG. 2), such as a BSC, which designated node may be in the same hierarchical system layer. Communication of the information may be subject to a suitable form of security coding since the information is potentially system/user sensitive.

As an alternative implementation, an interrogation mechanism of the node by either a higher-level system entity or designated node could equally be applied to the collection of information/data at an intermediate point.

Now, with the information/data from several test nodes available to at least one correlation node, the correlation node looks to identify patterns (206 of FIG. 2) in the information/data that could be representative of component faults or system operation. Any correlation is then, preferably, formatted 208 into a highly compressed report containing only pertinent data (reflecting event/parameter correlation between different test nodes), which report is sent 210 (typically in a coded form) to the central management point for assimilation. Should the report indicate a particular system fault or condition, then the central management point either: i) generates 212 an alarm (in a responsive fashion); or proactively ii) issues instructions to correct the fault or condition (through issuing software instructions); or iii) proactively addresses 214 the fault or condition be re-routing paths and/or re-assigning infrastructure equipment to accommodate the prevailing system condition. The system of the present invention therefore distributes management overhead across (generally) lower level system entities, with the central management point only having to assess highly compressed and pertinent report data. In this way, the present invention allows the central management point to review low-level system data that it would not have had access to in prior art system arrangements. In other words, the present invention is able to draw on a finer level of granularity in assessing system faults and operational conditions, whilst limiting information overhead to the central management point. Moreover, the finer level of granularity increases system diagnostic capabilities, whilst the highly compressed and pertinent report format eases demands on management processing (i.e. MiPS) capabilities.

In essence, a management-defined parameter derived from a specific test program executed at a first node is combined with a management-defined parameter derived from a specific test program (which may be the same test program or a different test program) at at least one other node. The combination of parameters is used to produce a composite parameter reflecting operational performance or fault conditions, the composite parameter generally reflecting performance correlation between the nodes under test, if any.

The present invention is therefore able to look to information that has joint properties between nodes. By directly extracting joint properties of data from a plurality of nodes (through the communication and comparison of selected uncompressed or partially compressed data) enables a greater compression of data than is possible by undifferentiated compression of the data at separate nodes followed by processing at an OMC.

Parameters that may be measured may include: quality of service (QoS) levels or requests; traffic levels; link quality measures (for the serving cell, neighbour cell); alternate air-interfaces; energy per modulating bit (E_{b}/N₀) target; link delay; user equipment (UE) transmission levels); network routing; the soft handover active set; and UE observed neighbours. Network events that may be monitored/assessed may include: mobile faults; radio coverage issues for a given service; identification and mapping of alternative (air-interface) technology locations; identification and mapping of boundary for handover to alternative technology; collection and/or correlation of data from users on alternative technology; and optimum QoS settings. Changes to a network that may be monitored include: determining handover (either with or without system consent); changes to QoS targets; changes to Eb/No targets; the recall of certain mobiles; the need to install new nodes, e.g. BTS equipment; the need to replace or repair a BTS; the need to modify or adapt network routing; and theneed to modify neighbour relationships.

In one particular embodiment, the OMC 48 downloads program code to determine, for example, coverage from a group of adjacent cells. The MS 12 is currently camped onto its serving cell, i.e. BTS 18, although MS12 monitors other BTSs in the area for handover requirements. In this embodiment, several BTSs are all running applications to determine cell coverage and to determine whether handover is occurring effectively. The DPAS (such as reference numeral 72) associated with BTS 18 analyses the measurement reports sent by MS 12 over a period of time. Other DPASs also analyse measurement reports from MS 12 and forward this information to DPAS 72 (which has been selected as the correlation node when the program code is downloaded). The forwarding of information can be automatic on upon request from DPAS 72. From the incident information/data, DPAS 72 can extrapolate information regarding coverage within the required cells. The applications running DPAS adjoined to the correlation node may be initiated either by correlation node itself or, for example, directly from the OMC 48.

In yet another embodiment of the invention, MS 12 may be traversing cell or sector boundaries such that the MS is subject to a handover routine. In the event that a BSC (involved in the process) determines that the handover process between BTSs is not occurring as expected, the BSC reports the problem/fault to an interconnected management site, e.g. OMC 48. The OMC 48 downloads a specific application into at least one of the DPAS related to the nodes involved with the handover process, which nodes then interact to determine if there is no spare traffic channel or whether another kind of fault exists. Preferably, one of the DPAS then pre-processes the data and filters out relevant data for return to the OMC.

In another embodiment, multiple MSs active in a particular cell are downloaded with a particular application that causes a mass calling load on the cell at a specific off-peak time. A related DPAS (associated with the BSS) is loaded with particular application software that monitors the nodes with which the BSS has contact during the mass load operation. Both the MS devices and the DPAS report relevant data to the OMC.

MS may also be downloaded with software that monitors when connection to the network is lost, with the software then configured to report loss to the OMC when the connection has been re-established.

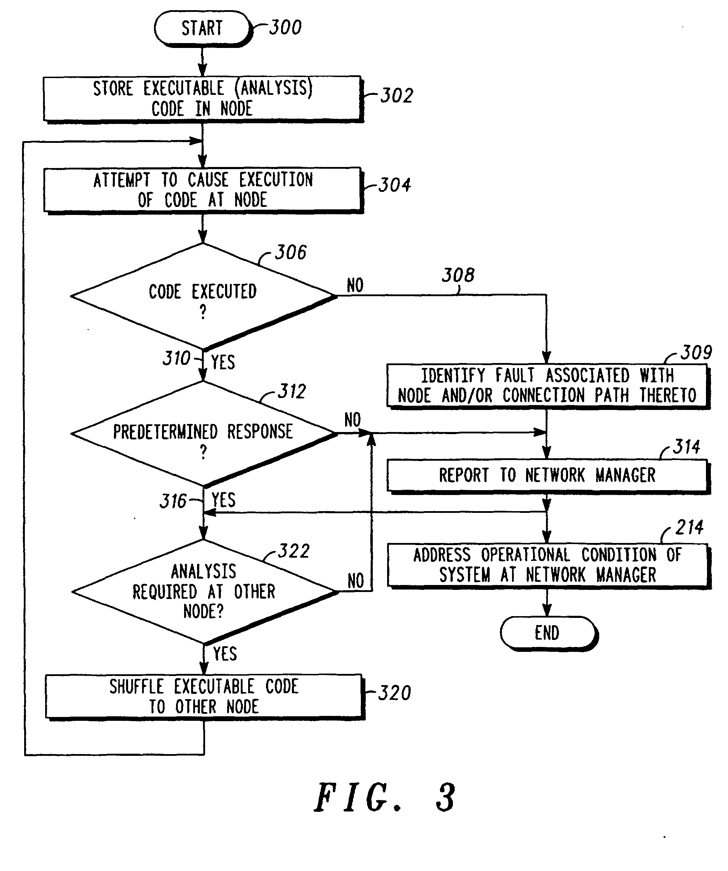

In one embodiment (see FIG. 3), the MS 12 connects to the file server 106 via the telephone network 24 described above using an appropriate connection route. If the MS 12 determines that fault conditions exists with the connection, it initiates 300 a procedure to assess operational capabilities of the network through identification of a cause and a point of system failure. More specifically, the MS 12 asks the network node to which it is connected, which in this instance is its serving BTS 18, to set up a test mode and to send a test mode acknowledgement. If the test mode is to be set up by the BTS (in response to MS request), the BSC 28 causes the BTS 18 to download and store (302) the test code to be run by the BTS 18 and an acknowledgement is preferably sent to the MS 12. The procedure can, of course, be implemented from a higher base point within the system (other than the MS 12) such that the mechanism is infrastructure-based.

One example of the test code might be:
start
write test encryption code ETY23561 L to memory
run decryption on memory using public 3-key code
respond with decrypted message
accept the next 1000 bytes and store in memory
encrypt code using public key and return code
indicate measured round trip delay in ms
end

If the tested node refuses/is unable to download and run the code 304-308, a conclusion can be inferred that the test node is either having difficulties in operational performance or is acting illegally. Hence, the network manager may be indirectly appraised on a fault and further analysis/work 309 (such as the dispatch of an engineer) may be required. Furthermore, in operation, if the node under test does not return expected code 310-314 then, again, a conclusion that the node is at fault may be drawn. If the node under test returns incomplete or corrupted data 310-314, the node can be identified as the source of the problem.

If the test algorithm proves the integrity 316 of the link and the node under test, the node can be instructed to shuffle 320, i.e. pass, the test routine onto the next node in the connection (should a further node exist 322 within a communication chain to the network manager or the like). The test regime is then continued (steps 304 onwards of FIG. 3) until a problem link/node is identified or the system is found to be fully operational.

In the exemplary manner of FIG. 3, a mechanism is provided that tracks the source of errors within a system without the need for centralised management and testing. The number of test instructions and the amount of test data and results crossing the network to the centralised network management centres can thus be considerably reduced. In a particular embodiment of the invention, the test procedure can be simultaneously applied to multiple parallel data paths employing independent nodes, e.g. an internet type environment. Periodic correlation of the various parallel paths may be applied to identify faults and to limit uplink management data transfer to a central management point, e.g. a file server 106, an OMC 48 or a portable PC-based management tool. Such correlation may therefore also follow and reflect the process and methodology set out in the flow diagram of FIG. 2. For example, the flow of FIG.3 could be enhanced to include steps 206 to 214 of FIG. 2, as will now be understood.

The test code can perform a number of different functions and may be comprised of one or primitives which the test environment is designed to assess. It is also worthy to note that the tested node (in this instance BTS 18) is not generally in control of the test, unlike self-test routines. Clearly, the system/operational mechanism of this particular aspect of the present invention is also applicable to solely wireline based systems, including the internet where multiple paths between nodes exist.

It is preferred that both upstream and downstream communication is encrypted for security, but other methods, such as connecting to a known time synchronised data source, may be employed

Of course, in an air-interface environment, the absence of a radio link may be entirely endemic of the underlying fault and no detailed problem analysis or identification may be required. In slightly different language, with the air-interface inoperative, even analysis software that is resident at a particular node cannot talk directly to the base station. However, provided that the node has access to additional/supplementary links (such as the world-wide web, a wide area network (WAN) or bluetooth), downloadable test software can be used to explore system operation or faults through the use of such alternative links.

Alternative embodiments of the invention may be implemented as computer program code encoded on a computer program product for use with a computer system. It is expected that such a computer program product may be distributed as a removable medium with accompanying printed or electronic documentation (e.g. shrink-wrapped software), preloaded with a computer system or distributed from a server or electronic bulletin board over a network (e.g. the Internet or World Wide Web). A series of computer instructions can therefore either be fixed on a tangible medium or fixed in a computer data signal embodied in a carrier wave that is transmittable to a computer system using wireline or wireless transmission techniques. The removable (i.e. tangible) medium may be a computer readable media, such as a diskette, CD-ROM, DVD-ROM or RAM, fixed disk, magneto-optical disks, ROMs, flash memory or magnetic or optical cards. The series of computer instructions embodies all or part of the functionality previously described herein with respect to the system.

Software embodiments of the invention may be implemented in any conventional computer programming language. For example, preferred embodiments may be implemented in a procedural programming language (e.g. "C") or an object oriented programming language (e.g. "C++").

Although the preferred operating method is realised by general or specific-purpose processor or logic circuits programmed with suitable machine-executable instructions, hardware components may possibly be used to implement certain features of the present invention. Of course, the present invention may be performed by a combination of hardware and software.

It will, of course, be appreciated that the above description has been given by way of example only and that modifications in detail may be made within the scope of the present invention. Whilst the present invention will be described in relation to the extensive system topography outlined above, the present invention can find application in particular facets of the topography. For example, the present invention can be employed solely in relation to the cellular system or, indeed, within a portion of the cellular system (such as within a BSC and lower system entities, e.g. BTS and MSs, associated therewith).

The present invention finds application in telecommunication systems in general, including (but not limited to) internet, dual band (radio frequency) systems, combined GSM/CDMA systems, and third generation multimedia applications.

## Claims

1. A telecommunication network (10) **characterized by** comprising:
a plurality of interconnected nodes (16-22, 26-34, 50-58), at least some of the nodes provided with executable program code measuring (204) at least one predetermined parameter associated with the node to produce low-level operational performance data;
a correlating node arranged to contrast the low-level operational performance data from at least two nodes (16-22, 26-34, 50-58) to generate a composite performance parameter; and
a network management device (48), responsive (210) to the composite performance parameter, arranged to interpret (212) the composite parameter to identify a network fault of the telecommunication network.

2. The telecommunications network of claim 1, wherein the composite parameter is compressed (208).

3. The telecommunications network of claim 1 or 2, wherein the executable program code has a function dependent upon the function of the node into which the executable program code is downloaded.

4. The telecommunications network of any preceding claim, wherein the network management device (48) generates (200) the executable program code to be downloaded.

5. The telecommunications network of any preceding claim, wherein data is at least one of event-driven, time-driven or channel associated data, and said data is time referenced.

6. The telecommunications network of any preceding claim, wherein the correlating node is configured to select data that is to be correlated.

7. The telecommunications network of any preceding claim, wherein the correlating node is responsive to an instruction that targets data to be correlated.

8. A node (16-22, 26-34, 50-58) for a telecommunication network (10), the node interconnected, in use, to at least a second node, the node **characterized by** comprising:
executable program code measuring (204) at least one predetermined parameter associated with the node to produce low-level operational performance data;
means (100) to contrast low-level operational performance data from the node with low-level operational performance data from the second node to generate a composite performance parameter indicative of a network fault of the telecommunication network; and
means to communicate the composite parameter to a management agent (48) arranged to interpret (214) the composite parameter to identify the network fault.

9. A method of managing a telecommunication system, formed of a plurality of interconnected nodes (16-22, 26-34, 50-58), the method **characterized by** comprising:
executing (204) program code at a node to measure at least one predetermined parameter associated with the node to produce low-level operational performance data;
correlating low-level operational performance data (206) from at least two nodes to generate a composite performance parameter;
communicating (210) the composite performance parameter to a network management device (48); and
interpreting (214) the composite performance parameter at the network manager (48) to identify a network fault of the telecommunication network.

10. The method of claim 9, wherein the composite parameter is compressed (208).

11. The method of claim 9 or 10, further comprising downloading the program code to the node on at least one of a periodic basis and in response to a management request.

12. The method of any of the previous claims 9 to 11, wherein data is at least one of event-driven, time-driven or channel associated data, and said data is time referenced.

13. A computer program element comprising computer program code means arranged to make a controller execute procedure to perform the method steps of any of claims 9 to 12.

## Patentansprüche

1. Telekommunikationsnetzwerk (10), **dadurch gekennzeichnet, dass** es umfasst:
eine Mehrzahl von miteinander verbundenen Knoten (16-22, 26-34, 50-58), wobei mindestens einige der Knoten mit ausführbarem Programmcode zum Messen (204) mindestens eines vorherbestimmten Parameters versehen sind, der dem Knoten zugeordnet ist, um Daten über eine Betriebsleistung auf niedrigem Niveau zu erzeugen;
einen korrelierenden Knoten, der so eingerichtet ist, dass er die Daten über die Betriebsleistung auf niedrigem Niveau von mindestens zwei Knoten (16-22, 26-34, 50-58) vergleicht, um einen zusammengefassten Leistungsparameter zu generieren; und
eine Netzwerkverwaltungsvorrichtung (48), die auf den zusammengefassten Leistungsparameter anspricht (210) und so eingerichtet ist, dass sie den zusammengefassten Parameter interpretiert (212), um einen Netzwerkfehler des Telekommunikationsnetzwerks zu identifizieren.

2. Telekommunikationsnetzwerk nach Anspruch 1, wobei der zusammengefasste Parameter komprimiert (208) ist.

3. Telekommunikationsnetzwerk nach Anspruch 1 oder 2, wobei der ausführbare Programmcode eine Funktion aufweist, die von der Funktion des Knotens abhängt, in den der ausführbare Programmcode heruntergeladen wird.

4. Telekommunikationsnetzwerk nach einem der vorhergehenden Ansprüche, wobei die Netzwerkverwaltungsvorrichtung (48) den herunterzuladenden ausführbaren Programmcode generiert (200).

5. Telekommunikationsnetzwerk nach einem der vorhergehenden Ansprüche, wobei die Daten zumindest ereignisgesteuerte, zeitgesteuerte oder kanalzugeordnete Daten sind und die Daten zeitbezogen sind.

6. Telekommunikationsnetzwerk nach einem der vorhergehenden Ansprüche, wobei der korrelierende Knoten so konfiguriert ist, dass er zu korrelierende Daten auswählt.

7. Telekommunikationsnetzwerk nach einem der vorhergehenden Ansprüche, wobei der korrelierende Knoten auf eine Anweisung anspricht, die auf zu korrelierende Daten gerichtet ist.

8. Knoten (16-22, 26-34, 50-58) für ein Telekommunikationsnetzwerk (10), wobei der Knoten im Gebrauch mit mindestens einem zweiten Knoten verbunden ist und der Knoten **dadurch gekennzeichnet ist, dass** er umfasst:
einen ausführbaren Programmcode zum Messen (204) mindestens eines vorherbestimmten Parameters, der dem Knoten zugeordnet ist, um Daten über die Betriebsleistung auf niedrigem Niveau zu erzeugen;
Mittel (100), um Daten über die Betriebsleistung auf niedrigem Niveau von dem Knoten mit Daten über die Betriebsleistung auf niedrigem Niveau von dem zweiten Knoten zu vergleichen, um einen zusammengefassten Leistungsparameter zu generieren, der einen Netzwerkfehler des Telekommunikationsnetzwerks anzeigt; und
Mittel, um den zusammengefassten Parameter an ein Verwaltungsmittel (48) zu kommunizieren, das so eingerichtet ist, dass es den zusammengefassten Parameter interpretiert (214), um den Netzwerkfehler zu identifizieren.

9. Verfahren zum Verwalten eines Telekommunikationssystems, das aus einer Mehrzahl von miteinander verbundenen Knoten (16-22, 26-34, 50-58) gebildet ist, wobei das Verfahren **dadurch gekennzeichnet ist, dass** es umfasst:
Ausführen (204) von Programmcode an mindestens einem Knoten, um mindestens einen vorherbestimmten Parameter zu messen, der dem Knoten zugeordnet ist, um Daten über die Betriebsleistung auf niedrigem Niveau zu erzeugen;
Korrelieren der Daten (206) über die Betriebsleistung auf niedrigem Niveau von mindestens zwei Knoten, um einen zusammengefassten Leistungsparameter zu generieren;
Kommunizieren (210) des zusammengefassten Leistungsparameters an eine Netzwerkverwaltungsvorrichtung (48); und
Interpretieren (214) des zusammengefassten Leistungsparameters an dem Netzwerkverwalter (48), um einen Netzwerkfehler des Telekommunikationsnetzwerks zu identifizieren.

10. Verfahren nach Anspruch 9, wobei der zusammengefasste Parameter komprimiert (208) ist.

11. Verfahren nach Anspruch 9 oder 10, das weiterhin das Herunterladen des Programmcodes an den Knoten auf mindestens einer periodischen Basis und als Antwort auf eine Verwaltungsanfrage umfasst.

12. Verfahren nach einem der vorhergehenden Ansprüche 9 bis 11, wobei die Daten zumindest ereignisgesteuerte, zeitgesteuerte oder kanalzugeordnete Daten sind und die Daten zeitbezogen sind.

13. Computerprogrammelement, das Computerprogrammcodemittel umfasst, die so eingerichtet sind, dass sie einen Controller veranlassen, eine Prozedur auszuführen, um die Verfahrensschritte nach einem der Ansprüche 9 bis 12 durchzuführen.

## Revendications

1. Réseau de télécommunication (10) **caractérisé en ce qu'**il comprend:
une pluralité de noeuds interconnectés (16-22, 26-34, 50-58), au moins certains des noeuds étant munis d'un code de programme exécutable qui mesure (204) au moins un paramètre prédéterminé qui est associé au noeud afin de produire des données de performance de fonctionnement de niveau bas ;
un noeud de corrélation qui est agencé pour confronter les données de performance de fonctionnement de niveau bas en provenance d'au moins deux noeuds (16-22, 26-34, 50-58) afin de générer un paramètre de performance composite ; et
un dispositif de gestion de réseau (48) qui est sensible (210) au paramètre de performance composite, agencé pour interpréter (212) le paramètre composite afin d'identifier une défaillance de réseau du réseau de télécommunication.

2. Réseau de télécommunication selon la revendication 1, dans lequel le paramètre composite est comprimé (208).

3. Réseau de télécommunication selon la revendication 1 ou 2, dans lequel le code de programme exécutable présente une fonction qui dépend de la fonction du noeud dans lequel le code de programme exécutable est déchargé.

4. Réseau de télécommunication selon l'une quelconque des revendications précédentes, dans lequel le dispositif de gestion de réseau (48) génère (200) le code de programme exécutable à décharger.

5. Réseau de télécommunication selon l'une quelconque des revendications précédentes, dans lequel les données sont au moins un jeu de données pris parmi des données pilotées par événement, des données pilotées par le temps ou des données associées à un canal et lesdites données sont référencées par rapport au temps.

6. Réseau de télécommunication selon l'une quelconque des revendications précédentes, dans lequel le noeud de corrélation est configuré pour sélectionner des données qui doivent être corrélées.

7. Réseau de télécommunication selon l'une quelconque des revendications précédentes, dans lequel le noeud de corrélation est sensible à une instruction qui cible des données à corréler.

8. Noeud (16-22, 26-34, 50-58) pour un réseau de télécommunication (10), le noeud étant interconnecté, en utilisation, sur au moins un second noeud, le noeud étant **caractérisé en ce qu'**il comprend :
un code de programme exécutable qui mesure (204) au moins un paramètre prédéterminé qui est associé au noeud afin de produire des données de performance de fonctionnement de niveau bas ;
un moyen (100) pour confronter des données de performance de fonctionnement de niveau bas en provenance du noeud avec des données de performance de fonctionnement de niveau bas en provenance du second noeud pour générer un paramètre de performance composite qui est indicatif d'une défaillance de réseau du réseau de télécommunication ; et
un moyen pour communiquer le paramètre composite à un agent de gestion (48) qui est agencé pour interpréter (214) le paramètre composite afin d'identifier la défaillance de réseau.

9. Procédé de gestion d'un système de télécommunication qui est formé par une pluralité de noeuds interconnectés (16-22, 26-34, 50-58), le procédé étant **caractérisé en ce qu'**il comprend :
l'exécution (204) d'un code de programme au niveau d'un noeud afin de mesurer au moins un paramètre prédéterminé qui est associé au noeud afin de produire des données de performance de fonctionnement de niveau bas ;
la corrélation de données de performance de fonctionnement de niveau bas (206) en provenance d'au moins deux noeuds afin de générer un paramètre de performance composite ;
la communication (210) du paramètre de performance composite à un dispositif de gestion de réseau (48) ; et
l'interprétation (214) du paramètre de performance composite au niveau du gestionnaire de réseau (48) afin d'identifier une défaillance de réseau du réseau de télécommunication.

10. Procédé selon la revendication 9, dans lequel le paramètre composite est comprimé (208).

11. Procédé selon la revendication 9 ou 10, comprenant en outre le déchargement du code de programme sur le noeud sur la base d'au moins un élément pris parmi une base périodique et en réponse à une requête de gestion.

12. Procédé selon l'une quelconque des revendications précédentes 9 à 11, dans lequel les données sont au moins un jeu de données pris parmi des données pilotées par événement, des données pilotées par le temps ou des données associées à un canal et lesdites données sont référencées par rapport au temps.

13. Elément de programme d'ordinateur comprenant un moyen de code de programme d'ordinateur agencé pour faire en sorte qu'un contrôleur exécute une procédure pour réaliser le procédé selon l'une quelconque des revendications 9 à 12.
